# EUROPEAN PATENT APPLICATION

(11) **EP 4 180 404 A1**
(43) Date of publication of application: **17.05.2023**
(21) Application number: 21020561.3
(22) Date of filing: 10.11.2021
(51) Int. Cl.: C04B 28/04, C04B 20/02

(54) **METHOD OF PRODUCING A SYNTHETIC CARBONATED MINERAL COMPONENT IN A CEMENT MANUFACTURING PLANT**

(71) Applicant: Holcim Technology Ltd, 6300 Zug (CH)
(72) Inventor: Schnedl, Gerold, A-2452 Mannersdorf am Leithagebirge (AT); Darmann, Stefan, A-8010 Graz (AT); Tomicz-Hazivar, Danijela, A-1210 Vienna (AT)
(74) Representative: Keschmann, Marc

(57) **Abstract**

A method of producing a synthetic carbonated mineral component in a cement manufacturing plant, comprising the steps of crushing concrete demolition waste, introducing the crushed concrete demolition waste into a raw meal mill without any prior screening step, grinding and simultaneously carbonating the crushed concrete demolition waste in the raw meal mill by reacting the crushed concrete demolition waste with CO₂ contained in a CO₂ enriched exhaust gas, thereby obtaining the synthetic carbonated mineral component, and removing the synthetic carbonated mineral component from the raw meal mill.

## Description

The invention relates to a method of producing a synthetic carbonated mineral component from concrete demolition waste in a cement manufacturing plant, wherein the cement manufacturing plant comprises a calcination device for producing Portland clinker by decarbonating cement raw meal while releasing a CO₂ enriched exhaust gas and further comprising a raw meal mill for grinding the cement raw meal before being introduced into the calcination device, wherein the CO₂ enriched exhaust gas is fed into the raw meal mill.

In known processes for producing cement clinker, raw meal is fed into a calcination device, in particular a rotary kiln, after it has been preheated and partially decarbonated in a multistage preheater system by using the heat of combustion gases exhausted from the rotary kiln. The preheated raw material is fed into the rotary kiln via the kiln inlet and travels to the kiln outlet while being calcined at temperatures of up to 1400°C.

Carbon dioxide (CO₂) is the most significant long-lived greenhouse gas in the Earth's atmosphere. The use of fossil fuels and deforestation have rapidly increased its concentration in the atmosphere, leading to global warming. Carbon dioxide also causes ocean acidification, because it dissolves in water to form carbonic acid.

The cement industry is an important emitter of CO₂. Within the cement production process, significant amounts of CO₂ are generated during the decarbonation of raw meal (containing CaCO₃) to lime (CaO). During the production of Portland cement clinker about 0,9 tons of CO₂ per ton of Portland cement clinker are emitted by the calcination of the raw materials and from the fuel combustion in the rotary kiln.

The use of alternative fuels, in particular renewable fuels, in the rotary kiln burner may reduce the amounts of greenhouse gases. However, substantial amounts of CO₂ are still produced by the decarbonation of raw meal and emitted into the atmosphere.

It has been proposed to use carbon capture and sequestration methods in order to reduce or prevent the emission of CO₂ from industrial processes into the atmosphere. Such methods comprise capturing CO₂ from flue gases for storage or for use in other industrial applications. However, such methods require the separation of CO₂ from the flue gases, wherein respective separation plants involve high capital and operating expenditures.

EP 3656750 A2 discloses a method for using the CO₂ contained in an exhaust gas of a cement manufacturing plant for carbonating carbonatable waste material, such as concrete demolition waste, fly ash or slag, wherein the carbonated waste material can be used as a supplemental cementitious material in cement compositions. The carbonation is carried out in a wet scrubber, a semi-dry scrubber or a dry scrubber, so that a separate installation is needed for the carbonation process. Therefore, a disadvantage of the method is that it requires high capital expenditures.

Concrete demolition waste is waste debris that is obtained from destruction of buildings, roads, bridges, or other concrete structure. Considering the large amounts of demolition waste that are to be disposed of every year, various methods of recycling concrete demolition waste have been proposed, including crushing and carbonating said waste for being used as a supplemental cementitious material in cement compositions. In prior art processes, however, only a fine fraction of the concrete demolition waste has been used for producing a supplemental cementitious material, thus requiring screening or separating steps prior or after the carbonation step.

The instant invention aims at further optimizing the recycling of concrete demolition waste and at further reducing the CO₂ footprint of a cement plant without significantly increasing the capital and operating expenditures.

In order to solve these objectives, the invention provides a method of producing a synthetic carbonated mineral component from concrete demolition waste in a cement manufacturing plant, wherein the cement manufacturing plant comprises a calcination device for producing Portland clinker by decarbonating cement raw meal while releasing a CO₂ enriched exhaust gas and further comprising a raw meal mill for grinding the cement raw meal before being introduced into the calcination device, wherein the CO₂ enriched exhaust gas is fed into the raw meal mill, wherein the method comprises the steps of:
a) crushing the concrete demolition waste to obtain crushed concrete demolition waste,
b) introducing the crushed concrete demolition waste into the raw meal mill without any prior screening step,
c) grinding and simultaneously carbonating the crushed concrete demolition waste in the raw meal mill, said carbonating being carried out by reacting the crushed concrete demolition waste with CO₂ contained in the CO₂ enriched exhaust gas, thereby obtaining the synthetic carbonated mineral component,
d) removing the synthetic carbonated mineral component from the raw meal mill.

The invention is based on the idea to carbonate concrete demolition waste by crushing it and introducing it into the raw meal mill of a cement manufacturing plant, which is usually used to grind cement raw meal in the presence of the exhaust gas coming from the calcination device of the cement manufacturing plant. Generally, the production capacity of the raw meal mills exceeds that of the kiln, which translates into downtime for the raw meal mills. During such a downtime the raw meal mill can be operated with crushed concrete demolition waste, preferably in the absence of any other material in the mill. In particular, the crushed concrete demolition waste is fed directly into the raw meal mill, where it is dried, ground and partly or totally carbonated.

According to the invention, the crushed concrete demolition waste is introduced into the raw meal mill without any prior screening step. In this way, the entire volume of concrete demolition waste that is obtained as a result of the crushing step can be used. Thus, the crushed demolition waste comprises hardened cement paste, sand, and aggregates in the same relative amounts as they are present in the original concrete. It has been found that sufficient carbonation can be achieved even when the crushed concrete demolition waste that is introduced into the raw meal mill comprises particles having a particle size of > 4 mm, preferably > 10 mm.

According to a preferred embodiment, the crushing step a) is carried out to obtain crushed demolition waste having a particle size of 0-15 mm. In particular, the crushing step a) is carried out to obtain a crushed demolition waste fraction having a particle size of 10-15mm, a crushed demolition waste fraction having a particle size of 5-10mm and a crushed demolition waste fraction having a particle size of 0-5mm.

By using the raw meal mill of a cement manufacturing plant for carbonating the crushed concrete demolition waste, the carbon dioxide generated within the cement manufacturing process by the combustion of fuels and by the decarbonation of raw meal is directly used within the existing process and its content in the exhaust gas is thus reduced. In other words, an in-situ carbonation of concrete demolition waste is integrated into the clinker manufacturing process of a cement plant. The in-situ carbonation process does not require any separate installations and therefore minimizes the capital expenditures needed for the carbonation process.

Since the existing raw meal mill is used for the carbonation process, the main stream of CO₂ enriched exhaust gas of the cement manufacturing process can be used for carbonating the concrete demolition waste. The main exhaust gas stream is coming from the preheater of the cement plant, in which cement raw meal is preheated in countercurrent flow to exhaust gas coming from the calcination device, i.e. the rotary kiln. This main exhaust gas stream is guided from the preheater exhaust gas outlet to an exhaust stack via a gas conditioning tower, the raw meal mill, and a filter unit. In the main exhaust gas stream, the content of carbon dioxide usually is around 5 to 20%, and that of water is between 2-15%.

According to the invention, grinding and carbonating the crushed concrete demolition waste are carried out simultaneously in the raw meal mill. The grinding step constantly exposes new surfaces of the crushed concrete demolition waste, where carbonation can take place. Preferably, the grinding step is carried out to obtain a synthetic carbonated mineral component where less than 20 wt.-%, preferentially less than 10 wt.-%, have a diameter larger than 90 micrometers, measured by weighing the residue on a 90 micrometer mesh sieve.
To increase the carbonation rate of the concrete demolition waste, the residence time of the material can be increased by creating a recirculation of the at least partly ground material back to the raw meal mill. In particular, the ground material drawn off from the raw meal mill may be fed into a separating device, such as a cyclone separator, and a coarse fraction is recirculated into the raw meal mill, whereas a fine fraction is used in a composite cement as the synthetic carbonated mineral component.

Generally speaking, the carbonation may be conducted until the concrete demolition waste has turned into a synthetic carbonated mineral component having pozzolanic properties. For example, the carbonation in the raw meal mill may be conducted until the CaCO₃ content of the crushed concrete demolition waste has increased by least 5 wt.-%, preferably by at least 10 wt.-%, that is the CaCO₃ content of the carbonatable substance has increased from x% to (x+5)%, preferably from x% to (x+10)%.

Industrial trials confirmed that the method of the invention is capable of capturing 50-100 kg CO₂ per ton of concrete demolition waste.

The carbonation rate may preferably be controlled by adjusting the feed rate of the crushed concrete demolition waste into the raw meal mill and/or by adjusting the grain size obtained by the crushing step.

In order to increase the residence time of the material in a CO₂ rich environment, thereby positively impacting the carbonation rate, a preferred embodiment of the invention provides that the crushed concrete demolition waste is dried in a dryer before being introduced into the raw meal mill, wherein the CO₂ enriched exhaust gas is used as a drying gas and the crushed demolition waste is carbonated in the dryer by reacting it with CO₂ contained in the CO₂ enriched exhaust gas.

In order to increase the humidity of the gas atmosphere, in which the carbonation is preformed, thereby improving the carbonation reaction, a preferred embodiment of the invention provides that water vapor is added to the CO₂ enriched exhaust gas before the CO₂ enriched exhaust gas enters the dryer and/or the raw meal mill.

The addition of water vapor may also be used to reduce the temperature of the CO₂ enriched exhaust gas, in order to obtain the optimal temperature range for the carbonation process. Preferably, the temperature in the raw meal mill during the carbonation and grinding step is adjusted to 110-140°C, preferably 120-130°C.

In case the CO₂ enriched exhaust gas is taken from the exhaust gas outlet of the preheater that is used for preheating ground cement raw meal, the gas temperature may preferably be reduced by adding water vapor. For example, the CO₂ enriched exhaust gas taken from the preheater may have a temperature of approximately 300°C and may be cooled down to a temperature in the range of 110-140°C, preferably 120-130°C.

Being a synthetic carbonated mineral component and due to its pozzolanic properties, the carbonated material can be used in cementitious compositions as a replacement material for Portland cement. In this way, the Portland clinker content and thus the CO₂ footprint of the composition may be reduced.

Preferably, the synthetic carbonated mineral component obtained from the process of the invention may be mixed with the Portland clinker coming from the calcination device of the same plant and optionally co-ground in a cement mill. Preferably, the synthetic carbonated mineral component coming from the raw meal mill is added to the mixing step without any prior separating or screening step, because the grinding step in the raw meal mill provides sufficiently fine material that may directly be used for mixing it with Portland clinker.

Alternatively, the synthetic carbonated mineral component obtained from the process of the invention may be mixed with a Portland cement in a mixing process. In this case, the synthetic carbonated mineral component is preferentially separately ground beforehand to increase its fineness, and increase its pozzolanic activity.

Depending on the effective pozzolanic activity of the synthetic carbonated mineral component and other characteristics such as water demand, the clinker amount in the Portland cement can be adapted to produce the cement having the desired performance in terms of setting times and strength development.

Preferably, the ratio of synthetic carbonated mineral component to Portland clinker is selected to be 5:95-30:70, preferably 15:85-25:75.

### Examples

In the following example, it will be shown that a composite cement, comprising Portland clinker and the synthetic carbonated mineral obtained from the method according to the invention can achieve similar results with regard to compressive strength and workability as comparable cements. The following composite cements were prepared:
Cement 1: CEM II/ C-M(S-cCDW) cement was obtained by mixing a "Base Cement" with of carbonated concrete demolition waste. It is composed of 47.6 wt.-% clinker, 5.0 wt.-% gypsum, 28.4 wt.-% blast furnace slag, and 19.0 wt.-% carbonated concrete demolition waste.
Cement 2: CEM II C-M /(S-rMIC) was obtained by mixing a "Base Cement" with carbonated material. It is composed of 47.6 wt.-% clinker, 5.0 wt.-% gypsum, 28.4 wt.-% blast furnace slag, and 19.0 wt.-% carbonated mixed demolition waste.
Cement 3: CEM II/C-M(S-L) was used as a reference example and was obtained by mixing a "Base Cement". It is composed of 47.6 wt.-% clinker, 5.0 wt.-% gypsum, 28.4 wt.-% blast furnace slag, with 20 wt.-% ground limestone.

Mortars were prepared with the above cement compositions and the mortars were subjected to workability and compressive strength tests. Based on such tests, it appears that the carbonation and grinding of the concrete demolition waste in a raw meal mill has a positive impact on the performance of the product, both, workability and the compressive strengths after 28d.

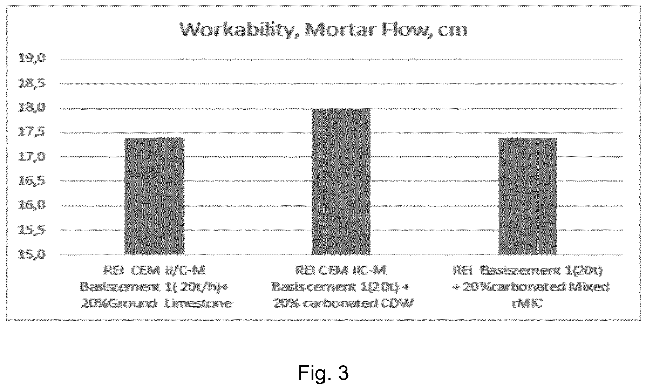

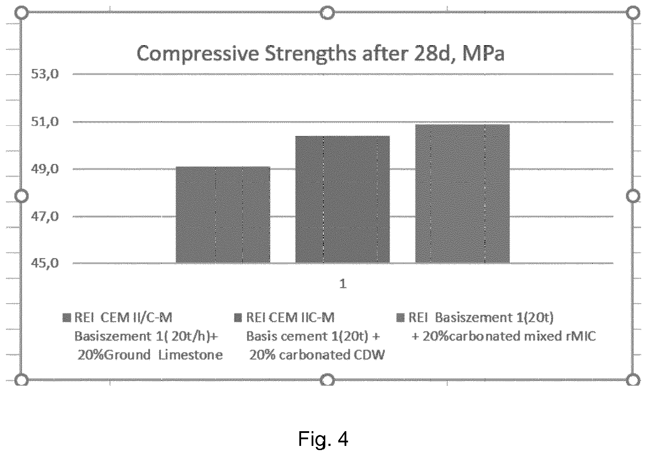

The carbonated concrete demolition waste is suitable for replacing the use of limestone in cements. As shown in Fig. 3 and 4, the workability of the mortar, assessed by measuring the mortar flow, is not significantly affected by replacing limestone filler with carbonated concrete demolition waste. The same applies to the 28-day strength values.

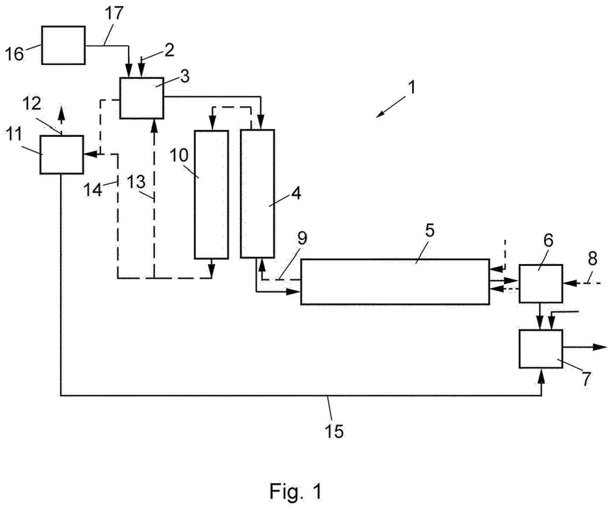

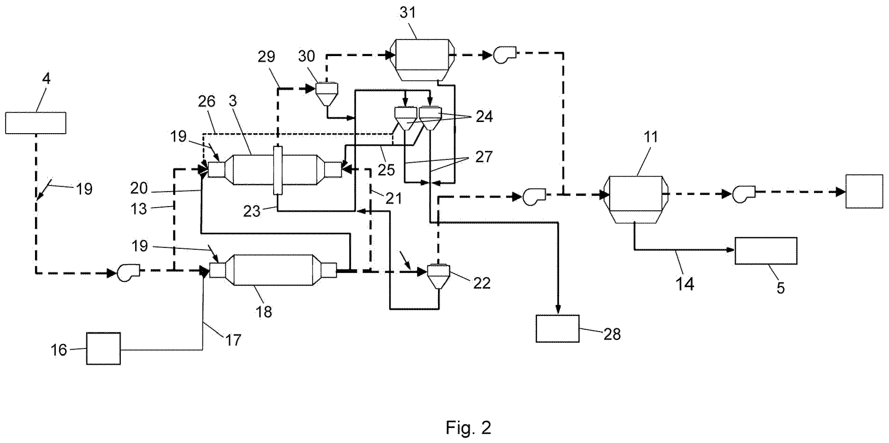

The invention will now be described in more detail with reference to the attached drawings. Therein, Fig. 1 shows a first layout of a cement plant for carrying out the method of the invention, Fig. 2 shows a partial view of a second layout of a cement plant for carrying out the method of the invention.

Fig. 1 schematically illustrates a cement plant for carrying out the method of the invention. In the cement clinker production plant 1 raw meal 2 is ground in a raw meal mill 3 and the ground raw meal is charged into a preheater string 4, where it is preheated in countercurrent to the hot exhaust gases 9 coming from a rotary clinker kiln 5. The preheater string 4 comprises a plurality of interconnected preheaters, such as cyclone suspension-type preheaters. The preheated and optionally pre-calcined raw meal is then introduced into the rotary kiln 5, where it is calcined to obtain cement clinker. The clinker leaves the rotary kiln 5 and is cooled in a clinker cooler 6. The cooled clinker is charged into a cement mill 7, where the clinker is ground to a desired fineness, optionally together with other components of the final product, such as supplementary cementitious substances and gypsum.

In Fig. 1, the flow of solid material is shown with solid lines, while the flow of gasses is shown with dotted lines. It can be seen that cooling air 8 is introduced into the clinker cooler 6, where the air is heated in heat exchange with the clinker. The heated air leaving the clinker cooler 6 is introduced into the rotary kiln 5, where the preheated raw meal is calcined, i.e. decarbonated, while releasing CO₂. The CO₂ enriched exhaust gas 9 is introduced into the preheater string 4 in order to preheat the raw meal. The exhaust gas withdrawn from the preheater string 4 is introduced into a gas conditioning tower 10, where water may be injected in order to cool the exhaust gas. In a typical operation mode, the cooled exhaust gas may be introduced into the raw meal mill 3 via the line 13 for preheating the raw meal and further cooling the exhaust gas. The exhaust gas leaving the raw meal mill 3 is loaded with fine particles of raw meal and is introduced into the main filter 11 for separating said fine particles from the exhaust gas. The exhaust gas is withdrawn from the main filter 11 at 12 and directed to an exhaust stack (not shown).

If the raw meal mill 3 is not in operation, the cooled exhaust gas coming from the gas conditioning tower 10 is directly led to the main filter 11 via the line 14, where cement kiln dust entrained from rotary kiln 5 is separated from the exhaust gas. The separated particles collected in the main filter 11 may be introduced into the cement mill 7 via the line 15 to be co-ground with the clinker.

In order to adapt such a typical configuration of a cement manufacturing plant for recycling concrete demolition waste and for reducing the CO₂ footprint of the cement manufacturing process, the method of the invention provides for the introduction of concrete demolition waste into the process. Concrete demolition waste is first crushed in a suitable crusher (not shown), in order to obtain a crushed material having particles over a particle size range 0-15 mm. The crushed concrete demolition waste is stored in a storage container 16. During a period, in which the raw meal mill 3 is not operating for grinding cement raw meal, crushed concrete demolition waste is introduced into the raw meal mill 3 via the line 17.

During its residence time in the raw meal mill 3, the concrete demolition waste gets carbonated by reacting with the CO₂ contained in the exhaust gas, thereby reducing the CO₂ content of the exhaust gas. By carbonating the concrete demolition waste, a synthetic carbonated mineral component is obtained that is withdrawn. The synthetic mineral component may be introduced into the cement mill 7 for being co-ground with Portland clinker.

Fig. 2 shows an alternative embodiment in a more detailed illustration, wherein only those parts of the cement plant are shown that are relevant for the inventive carbonation process. In the alternative embodiment of Fig. 2 carbonation of concrete demolition waste takes place not only in the raw meal mill 3, but also in a dryer 18. CO₂ enriched exhaust gas is withdrawn from the preheater 4 and fed to the dryer 18, into which the crushed concrete demolition waste is charged via a line 17. The dried material leaving the dryer 18 is fed into the raw meal mill 3 via a line 20 and the exhaust gas leaving the dryer 18 is at least partly fed into the raw meal mill 3 via a line 21. A remaining part of the exhaust gas from the dryer 18 may be guided into a cyclone separator 22, where particles remaining in the exhaust gas are separated and fed into the discharge line 23 of the raw meal mill 3. The exhaust gas leaving the cyclone separator 22 is fed into the main filter 11.

A part of the CO₂ enriched exhaust gas that is withdrawn from the preheater 4 is fed directly to the raw meal mill 3, where the dried material coming from the dryer 18 is ground and simultaneously carbonated by being in contact with the CO₂ enriched exhaust gas. The ground material is withdrawn from the raw meal mill 3 via the discharge line 23 and fed into a pair of cyclone separators 24, where a fine fraction is separated from a coarse fraction. The coarse fraction is recirculated to the raw meal mill 3 via a line 25 and/or a line 26. The fine fraction is withdrawn via lines 27 and fed into a storage container 28. The synthetic mineral component stored in the storage container may later be introduced into a cement mill and co-ground with clinker.

Exhaust gas is withdrawn from the raw meal mill 3 via the line 29 and fed to a cyclone separator 30, in which entrained particles are separated from the exhaust gas and introduced into the pair of cyclone separators 24, in which the entrained particles are classified in the same way as the ground material withdrawn via the discharge line 23. The exhaust gas leaving the cyclone separator 30 is further purified in a filter 31, such as an electrostatic precipitator, in which fine particles are separated. The separated fine particles are fed to the storage container 28. The purified exhaust gas undergoes additional filtration by means of the filter 11, which can also be designed as an electrostatic precipitator.

Water vapor may be injected into the exhaust gas stream at several sites denoted by 19.

## Claims

1. A method of producing a synthetic carbonated mineral component from concrete demolition waste in a cement manufacturing plant, wherein the cement manufacturing plant comprises a calcination device for producing Portland clinker by decarbonating cement raw meal while releasing a CO₂ enriched exhaust gas and further comprising a raw meal mill for grinding the cement raw meal before being introduced into the calcination device, wherein the CO₂ enriched exhaust gas is fed into the raw meal mill, wherein the method comprises the steps of:
a) crushing the concrete demolition waste to obtain crushed concrete demolition waste,
b) introducing the crushed concrete demolition waste into the raw meal mill without any prior screening step,
c) grinding and simultaneously carbonating the crushed concrete demolition waste in the raw meal mill, said carbonating being carried out by reacting the crushed concrete demolition waste with CO₂ contained in the CO₂ enriched exhaust gas, thereby obtaining the synthetic carbonated mineral component,
d) removing the synthetic carbonated mineral component from the raw meal mill.

2. Method according to claim 1, wherein the crushing step a) is carried out to obtain crushed demolition waste having a particle size of 0-15 mm.

3. Method according to claim 1 or 2, wherein the grinding step is carried out to obtain a synthetic carbonated mineral component, wherein less than 20 wt.-%, preferentially less than 10 wt.-%, have a diameter larger than 90 micrometers, measured by weighing the residue on a 90 micrometer mesh sieve.

4. Method according to claim 1, 2 or 3, wherein the crushed concrete demolition waste is dried in a dryer before being introduced into the raw meal mill, wherein the CO₂ enriched exhaust gas is used as a drying gas and the crushed demolition waste is carbonated in the dryer by reacting it with CO₂ contained in the CO₂ enriched exhaust gas.

5. Method according to any one of claims 1 to 4, wherein water vapor is added to the CO₂ enriched exhaust gas before the CO₂ enriched exhaust gas enters the dryer and/or the raw meal mill.

6. Method according to any one of claims 1 to 5, wherein the temperature in the raw meal mill during said carbonation and grinding step is adjusted to 110-140°C, preferably 120-130°C.

7. Method according to any one of claims 1 to 6, wherein the CO₂ enriched exhaust gas released from the calcination device is used for preheating ground cement raw meal in a preheater, and wherein the CO₂ enriched exhaust gas exiting from the preheater is fed into the raw meal mill.

8. Method according to claim 7, wherein water vapor is added to the CO₂ enriched exhaust gas exiting from the preheater.

9. Method according to any one of claims 1 to 8, wherein carbonation in the raw meal mill is conducted until the CaCO₃ content of crushed concrete demolition waste has increased by at least 5 wt.-%

10. Method according to any one of claims 1 to 9, wherein a carbonation rate is controlled by adjusting the feed rate of the crushed concrete demolition waste into the raw meal mill and/or by adjusting the grain size obtained by the crushing step.

11. Method according to any one of claims 1 to 10, wherein the synthetic carbonated mineral component is mixed with Portland clinker, preferably Portland clinker coming from the calcination device, so as to produce a composite Portland cement.

12. Method according to claims 11, wherein the synthetic carbonated mineral component coming from the raw meal mill is added to the mixing step without any prior separating or screening step.

13. Method according to claim 11 or 12, wherein the ratio of synthetic carbonated mineral component into Portland cement is 5-30%, preferable 20%.

14. Method according to any one of claims 11 to 13, wherein the synthetic carbonated mineral component and the Portland clinker are co-ground in a cement mill of the cement manufacturing plant.
